Europäisches Patentamt

European Patent Office

Office européen des brevets

(11) Publication number: **0 463 766 A2**

# EUROPEAN PATENT APPLICATION

(21) Application number: **91305255.1**

(22) Date of filing: **11.06.91**

(51) Int. Cl.⁵: **G06F 15/72**

(30) Priority: **28.06.90 GB 9014368**

(43) Date of publication of application:
**02.01.92 Bulletin 92/01**

(84) Designated Contracting States:
**DE FR IT**

(71) Applicant: **GEC-MARCONI LIMITED**
**The Grove, Warren Lane**
**Stanmore, Middlesex HA7 4LY(GB)**

(72) Inventor: **Watson, Graham**
**36 Ravenfield, Barstable East**
**Basildon, Essex, SS14 1UG(GB)**

(74) Representative: **Cockayne, Gillian et al**
**GEC Patent Department, GEC Marconi**
**Limited, West Hanningfield Road**
**Great Baddow, Chelmsford Essex CM2**
**8HN(GB)**

(54) **Fractal image generation.**

(57) A method of generating a image comprising defining a basic image indicative of a three-dimensional scene for display on a screen, defining points within the basic image, which are joined to constitute boundaries and corners of regions of the basic image; determining the midpoints of the boundaries and the regions; displacing the apparent height of the midpoints by a random amount; subdividing the regions to form further regions and repeating the process for each of said further regions; wherein the random displacement is dependent upon the variance in the apparent height of the corners of the region or further region, the fractal dimension of the region and the number of times the process has been repeated.

FIG.1

The present invention relates to the generation of fractal image representing three dimensional objects. The invention is particularly, though not exclusively, applicable to the generation of terrain images.

In certain imaging systems, eg flight simulators, information relating to terrain is stored in a database. However, the amount of information which can be stored is limited in order that the full field of view can be accommodated and consequently, the images stored lack detail. The detail of a terrain feature can be related to the fractal dimension of that feature and the present invention has arisen in an attempt to use the fractal dimension of a region in the amplification of the database information relating to that region.

In accordance with the present invention, there is provided a method of generating an image comprising defining a basic image indicative of a three-dimensional scene for display on a screen, defining points within the basic image which are joined to constitute boundaries and corners of regions of the basic image; determining the midpoints of the boundaries and the regions; displacing the apparent height of the midpoints by a random amount; subdividing the regions to form further regions and repeating the process for each of said further regions; wherein the random displacement is dependent upon the variance in the apparent height of the corners of the region or further region, the fractal dimension of the region and the number of times the process has been repeated.

Typically, the random displacement is directly dependent upon said variance and exponentially dependent upon said number of times and said fractal dimension.

In one embodiment, the basic image is divided into a plurality of similar regions forming a contiguous pattern, each region having corners of predefined altitude and appropriate fractal dimensions being assigned to the regions.

Preferably, the same number of iterations of the process are formed for each region of the image.

The random displacement is conveniently determined using a pseudo-random number generation algorithm. This is typically seeded with a number determined by coordinates taken from the region. Furthermore, internal coordinates in each region can be used and it is preferred that adjacent regions use the same internal coordinate sequence.

The present invention will now be described by way of example, with reference to the accompanying drawings, in which:-

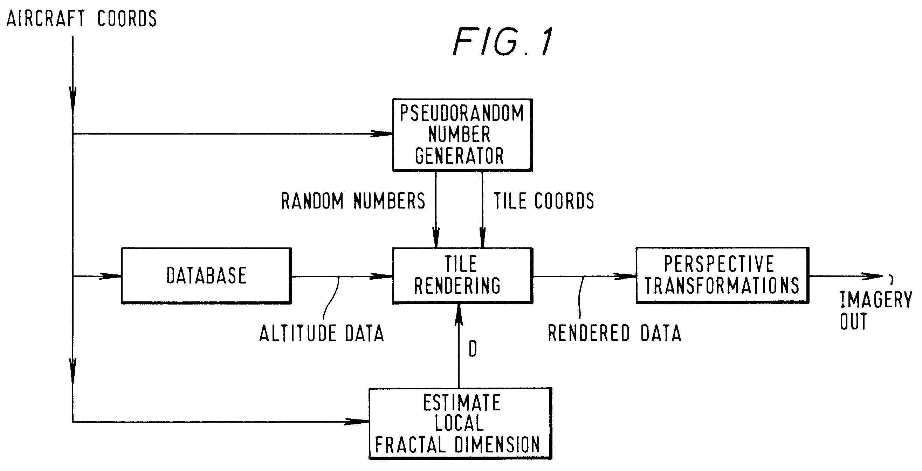

Figure 1 shows a block diagram of a system according to one embodiment of the invention;

Figures 2 to 8 show successive applications of the method according to an embodiment of the invention on one image; and

Figure 9 shows a portion of two adjacent image tiles.

The invention will be described in relation to a system for displaying terrain features such as may be found in a flight simulator or similar situation.

Terrain data as employed in airborne applications is typically stored as a 100 m grid patter referred to as 'tiles'. For a fast jet, flying at say 100 m, this means there would be approximately 3 terrain tiles across the field of view in the foreground, increasing to 30 or so at 5 km. For synthetic terrain displays, such as flight simulation, there is not enough stored detail to allow the pilot to estimate distances at this resolution. The present invention serves to add detail which is both natural-looking and in keeping with the local characteristics of the terrain data.

The basis of the process is to treat each of the database terrain 'tiles' as a starting point for a recursive subdivision process. Each tile is rendered in the manner described below, until the desired increase in resolution is achieved.

A terrain 'tile' is defined by four spot altitudes at its corners. The first stage of the process involves finding the midpoints of each of the edges, and also the midpoint of the tile itself. These points are assigned altitudes by a simple linear interpolation process. To each of these points is then added a random displacement, taken from a Gaussian distribution. The variance of these displacements is determined by the scale at which we are working. The process is then repeated for each of the resulting 4 tiles, and so on, until the desired resolution is achieved. The variance of the random displacements is also scaled according to the desired fractal dimension of the surface. At the nth iteration, the variance of the displacement is given by

$$\Delta_n = \sigma(\tfrac{1}{2})^{n.2.(3-D)}$$

where D is the desired fractal dimension, and $\sigma$ is the variance of the initial 4 altitudes.

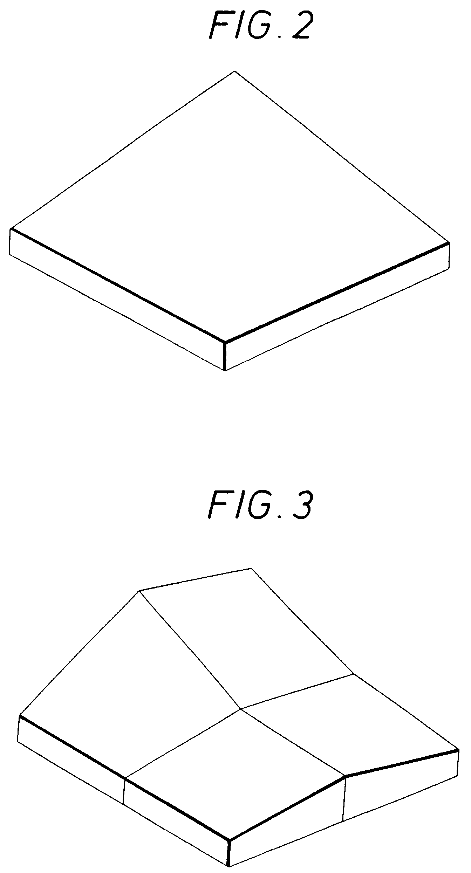

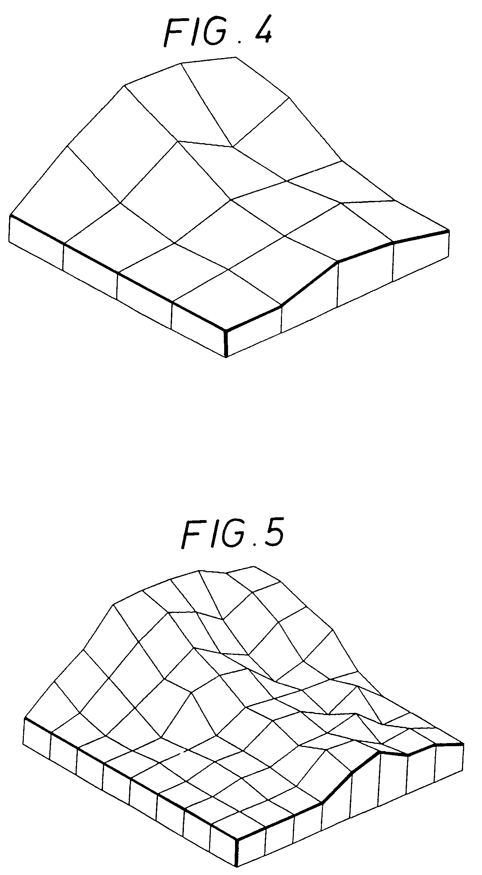

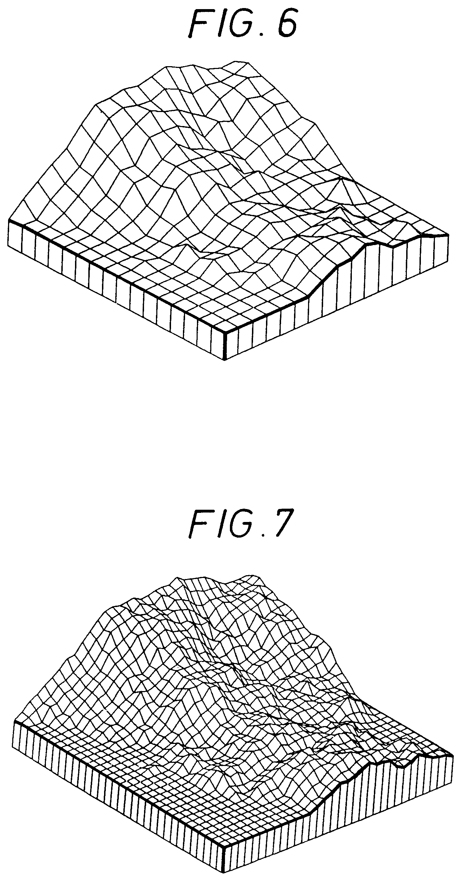

A typical sequence is shown in Figures 2 to 8. The fractal dimension of the terrain thus generated is 2.2, which is a good approximation of the measured value for natural terrain.

The random numbers required for the process will in general be generated by a pseudo-random algorithm. Such algorithms are primed with a starting seed, and successive calls to the algorithm return a seuqnce of pseudo-random numbers. The seed is usually based upon a relatively unpredictable source, for example the computer system clock.

However, if the algorithm is provided with the same seed twice, we obtain the same sequence of pseudo-random numbers. So, to ensure consistent rendering for a particular terrain tile, the random number generator is seeded with a function of the tiles coordinates. This will then ensure temporal consistency such that every time that particular tile is viewed, it will appear the same.

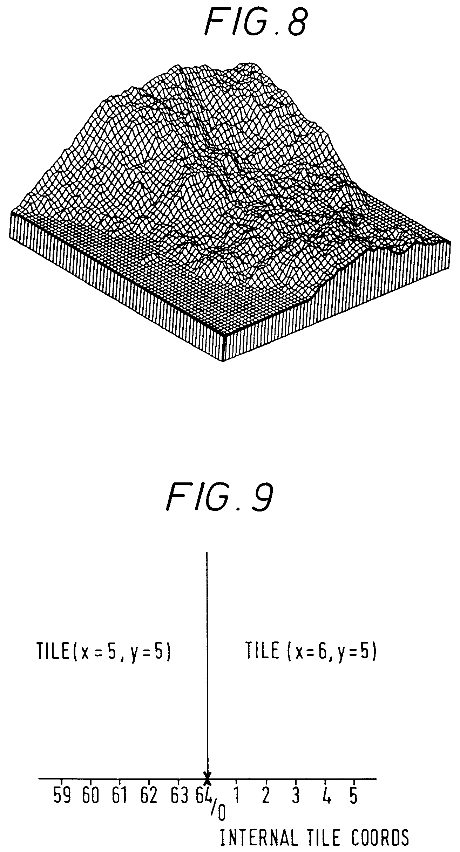

It is also necessary to ensure external consistency from tile to tile to remove local discontinuities; tiles rendered separately must butt together to look natural. To achieve this, the coordinates of the point with the terrain tile are included in the seed and the extreme right hand point of one tile is coincident with the extreme left hand point of the adjacent tile, at the point where they butt up. As an example, consider two tiles as shown in Figure 9. If, for example, the seeding of the random number generator is from a function of the x-coordinates only, the point x would have to produce the same seed for both tiles $x = 5$, $x = 6$. Taking 100 x (tile x-coord) + (internal tile coord) x 100/64 will achieve the desired result. In operation, the random number generators would be seeded by a combination of x and y coordinates, transformed appropriately by the above scheme.

It is important to ensure that the characteristics of each rendered tile are in keeping with the broad characteristics of the surrounding landscape. This will prevent a flat plane being rendered as a mountain and vice versa.

The two controlling parameters for the midpoint subdivision process are the initial variance of altitudes at the corners of the tiles, and the fractal dimension we desire. The variance is set by the database used, and as such should not be utilized for altering the form of the rendering. However the fractal dimensions is entirely under control and will therefore be desirable to relate the fractal dimension of the tile under consideration to the local measured fractal dimension. The latter may be determined by a variety of methods, for example, measuring the rate of fall-off of spatial frequencies within one landscape as a function of spatial frequency.

## Claims

1. A method of generating an image comprising defining a basic image indicative of a three-dimensional scene for display on a screen, defining points within the basic image which are joined to constitute boundaries and corners of regions of the basic image; determining the midpoints of the boundaries and the regions; displacing the apparent height of the midpoints by a random amount; subdividing the regions to form further regions and repeating the process for each of said further regions; wherein the random displacement is dependent upon the variance in the apparent height of the corners of the region or further region, the fractal dimension of the region and the number of times the process has been repeated.

2. A method as claimed in claim 1, wherein the random displacement is directly dependent upon said variance and expotentially dependent upon said number of times and said fractal dimension.

3. A method as claimed in claim 1 or 2, wherein the basic image is divided into a plurality of similar regions forming a contiguous pattern, each region having corners of predefined altitude and appropriate fractal dimensions being assigned to the regions.

4. A method as claimed in any preceding claim, wherein the same number of iterations of the process are formed for each region of the image.

5. A method as claimed in any preceding claim, wherein the random displacement is determined using a pseudo-random number generation algorithm.

6. A method as claimed in claim 5, wherein the algorithm is seeded with a number determined by coordinates taken from the region.

7. A method as claimed in claim 6, wherein internal coordinates in each region are used.

8. A method as claimed in claim 7, wherein adjacent regions use the same internal coordinate sequence.

9. A flight simulation which utilizes a method as claimed in any preceding claim.

EP 0 463 766 A2

AIRCRAFT COORDS

## FIG.1

PSEUDORANDOM
NUMBER
GENERATOR

RANDOM NUMBERS       TILE COORDS

DATABASE

TILE
RENDERING

PERSPECTIVE
TRANSFORMATIONS

IMAGERY
OUT

ALTITUDE DATA

D

RENDERED DATA

ESTIMATE
LOCAL
FRACTAL DIMENSION

## FIG. 2

## FIG. 3

# FIG . 4

# FIG . 5

FIG. 6

FIG. 7

## FIG.8

## FIG.9

TILE(x = 5, y = 5)          TILE (x = 6, y = 5)

59  60  61  62  63  64/0  1  2  3  4  5

INTERNAL TILE COORDS